# EUROPÄISCHE PATENTSCHRIFT

(11) **EP 0 344 360 B1**
(45) Veröffentlichungstag und Bekanntmachung des Hinweises auf die Patenterteilung: **12.05.1993**
(21) Anmeldenummer: 88119192.8
(22) Anmeldetag: 18.11.1988
(51) Int. Cl.: C03B 17/04, C03B 5/12

(54) **Verfahren zur kontinuierlichen Herstellung eines Rohres oder Stabes aus Quarzglas**
Method for continuously making tubes or rods from quartz glass
Procédé de fabrication continue d'un tube ou d'une barre en verre de quartz

(30) Priorität: 10.05.1988 DE 3815974
(43) Veröffentlichungstag der Anmeldung: 06.12.1989
(73) Patentinhaber: Heraeus Quarzglas GmbH, D-63405 Hanau (DE)
(72) Erfinder: Leber, Helmut, Dr., D-6450 Hanau 1 (DE); Whippey, Nigel R., D-6453 Seligenstadt (DE)
(74) Vertreter: Heinen, Gerhard, Dr.

(56) Entgegenhaltungen:
- CH-A- 420 502
- DE-B- 1 205 660
- FR-A- 2 134 050
- US-A- 2 765 586

## Beschreibung

Die Erfindung bezieht sich auf ein Verfahren zur kontinuierlichen Herstellung eines Rohres oder Stabes aus Quarzglas durch Erhitzen von teilchenförmigem Siliziumdioxid auf Erweichungstemperatur in einem Tiegel aus hochschmelzendem Werkstoff, insbesondere aus im wesentlichen Wolfram oder Molybdän, mit Bodenausflußöffnung, in der ein Formwerkzeug angeordnet ist, und kontinuierliches Abziehen des erweichten Siliziumdioxids nach unten durch den zwischen Bodenausflußöffnung und Formwerkzeug gebildeten Ringraum, wobei im Tiegel oberhalb des Siliziumdioxids und im Raum, der sich an den Formgebungsbereich unterhalb des Tiegels anschließt, eine wasserstoffhaltige Atmosphäre aufrechterhalten wird.

Verfahren der vorgenannten Art sind aus der US-PS 2,155,131 bekannt. Bei dem bekannten Verfahren wird im Tiegel oberhalb des Siliziumdioxids und unterhalb des Tiegels eine wasserstoffhaltige Atmosphäre aufrechterhalten, die aus 20 % Wasserstoff und 80 % Stickstoff besteht. Die so hergestellten Quarzglasrohre sind frei von Lufteinschlüssen und sehr klar und zeichnen sich durch gleichmäßige Wandstärken aus.

Aus der DE-AS 1 205 660 ist ein Verfahren zum Ziehen von Glasrohren aus der Schmelze bekannt, bei dem zur Regelung und Aufrechterhaltung der erforderlichen Ziehtemperaturen eine Wechselspannung zwischen dem Ziehdorn und der Düse angelegt ist.

Aus der FR-A 2 134 050 ist es bekannt, einen Quarzglaskörper hoher optischer Qualität herzustellen, indem Siliciumdioxid-Partikel einem Schmelztiegel zugeführt und dort unter einer Helium-Wasserstoff-Atmosphäre mit 40 bis 65 Prozent Wasserstoff und 60 bis 35 Prozent Helium, bei einer Temperatur von wenigstens 2050°C aufgeschmolzen und anschließend in Gegenwart von wasserstoffhaltigem Gas, mit einem Volumengehalt von 1 bis 20 Prozent Wasserstoff, durch eine unter dem Schmelztiegel angeordnete und mit Heizmitteln versehene Düse gezogen werden, deren Temperatur unterhalb von 2050°C gehalten wird.

Die Anforderungen an Quarzglasprodukte, die als Halbzeuge, beispielsweise für die Herstellung optischer Fasern oder auch für die Herstellung von Geräteteilen in der Halbleiterindustrie verwendet werden, unterliegen immer höheren Anforderungen bezüglich ihrer Reinheit, insbesondere richten sich diese hohen Reinheitsanforderungen auf Alkali-Verunreinigungen des Quarzglases.

Die Erfindung hat sich daher die Aufgabe gestellt, ein Verfahren zur kontinuierlichen Herstellung von Rohren oder Stäben aus Quarzglas zu schaffen, deren Gehalt an Lithium-Verunreinigungen auf Werte in der Größenordnung von 1/10 ppm und weniger vermindert ist.

Gelöst wird diese Aufgabe für das eingangs charakterisierte Verfahren erfindungsgemäß durch die Kombination folgender Merkmale:
Es wird eine Atmosphäre mit wenigstens 80 % Wasserstoff-Gehalt verwendet und zwischen Formwerkzeug und Tiegel eine elektrische Potentialdifferenz derart und von der Größe aufrechterhalten, daß das elektrische Feld vom Formwerkzeug auf den Tiegel gerichtet ist, und die elektrische Stromstärke mindestens 0,7 mA pro cm³ und Minute Verweilzeit des erweichten Siliziumdioxids im elektrischen Feld beträgt.

Bewährt hat es sich, das teilchenförmige Siliziumdioxid auf eine Temperatur im Bereich von 1900°C bis 2300°C zu erhitzen und eine Potentialdifferenz im Bereich von 200 V bis 600 V aufrechtzuerhalten. Als wasserstoffhaltige Atmosphäre hat sich besonders ein Wasserstoff-Helium-Gemisch bewährt, wobei der Wasserstoff-Gehalt dieses Gemisches mindestens 85 % beträgt. Nach dem Erkalten des Rohres oder Stabes aus Quarzglas wird vorzugsweise dessen Außenschicht bis zu einer Dicke von 2 mm abgetragen.

Durch die Aufrechterhaltung der wasserstoffhaltigen Atmosphäre im Tiegel füllt der Wasserstoff die zwischen dem teilchenförmigen Siliziumdioxid vorhandenen Zwischenräume aus und gelangt auf diese Weise in das auf Erweichungstemperatur erhitzte Siliziumdioxid. Dadurch, daß Wasserstoff sehr leicht in Siliziumdioxid hineindiffundiert, wird seine Absorption hierdurch besonders unterstützt. Das auf Erweichungstemperatur im Tiegel erhitzte Siliziumdioxid fließt durch den Ringraum zwischen der Bodenausflußöffnung und dem Formwerkzeug aus dem Tiegel und wird nach unten abgezogen. In dem Ringraum wird das erweichte Siliziumdioxid einem elektrischen Feld unterworfen. Aufgrund der erfindungsgemäßen Ausrichtung des elektrischen Feldes vom Formwerkzeug zum Tiegel wandern die im erhitzten Siliziumdioxid enthaltenen Verunreinigungs-Ionen zu den jeweiligen Elektroden und reichern sich an der Oberfläche des Quarzglases an. Als Werkstoff für das Formwerkzeug werden die gleichen hochschmelzenden Werkstoffe benutzt, wie sie beispielsweise als Tiegelwerkstoff bei dem erfindungsgemäßen Verfahren verwendet werden, also insbesondere aus im wesentlichen Wolfram oder Molybdän bestehende Formwerkzeuge. Durch die Wasserstoffeinlagerung in das Siliziumdioxid wird die an der Anode, dem Formwerkzeug, auftretende und unerwünschte anodische Oxidation weitgehend vermieden, so daß das Eindringen von Oxidationsprodukten der Anode in das erweichte Siliziumdioxid praktisch verhindert wird. In Richtung der Kathode, der Bodenausflußöffnung des Tiegels, wandern die Alkali-Ionen, die als Verunreinigungen in dem als Ausgangsmaterial verwendeten teilchenförmigen Siliziumdioxid vorhanden sind.

Die Vorteilhaftigkeit des erfindungsgemäßen Verfahrens hat sich beispielsweise dadurch ergeben, daß teilchenförmiges Siliziumdioxid mit einer Lithium-Verunreinigung von etwa 1 ppm durch das erfindungsgemäße Verfahren diese Lithium-Verunreinigung auf etwa 0,01 ppm, also um praktisch zwei Größenordnungen vermindert werden konnte. Ähnliche Ergebnisse konnten auch bezüglich Natrium- und Kalium-Verunreinigungen festgestellt werden. So wurde beispielsweise eine Natrium-Verunreinigung von 1,35 ppm ebenfalls auf etwa 0,01 ppm und eine Kalium-Verunreinigung von 0,1 ppm auf etwa 0,03 ppm gesenkt. Auch hinsichtlich anderer Verunreinigungen, wie Eisen- und Kupfer-Verunreinigungen, die im Ausgangsmaterial des teilchenförmigen Siliziumdioxids enthalten sind, konnten ebenfalls vermindert werden. Überraschenderweise hat sich ferner gezeigt, daß die nach dem erfindungsgemäßen Verfahren hergestellten Rohre und Stäbe auch bezüglich der Restfeinblasigkeit eine Verbesserung erfuhren; die Rohre und Stäbe wiesen eine verminderte Restfeinblasigkeit auf gegenüber Rohren und Stäben, wie sie nach dem eingangs genannten Stand der Technik hergestellt wurden. Auch besitzen erfindungsgemäß hergestellte Quarglasrohre eine höhere thermische Stabilität als solche, die nach üblichen Verfahren hergestellt wurden, d.h. sie verformten sich bei hohen Temperaturen erst nach längerer Verweilzeit bei diesen Temperaturen als Rohre, die nach dem eingangs angegebenen Verfahren des Standes der Technik hergestellt wurden.

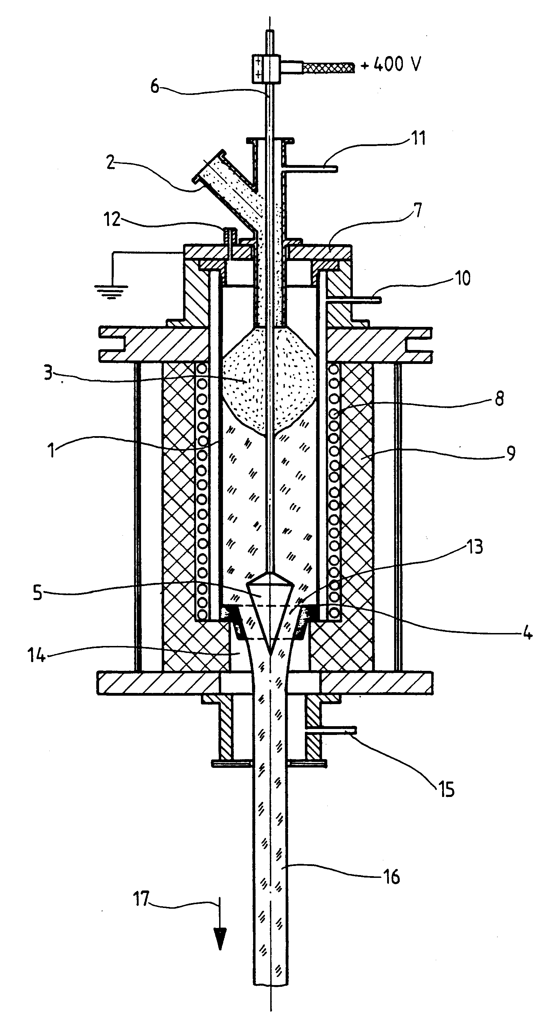

Anhand der in der Figur schematisch dargestellten Vorrichtung zur Durchführung des erfindungsgemäßen Verfahrens wird ein Ausführungsbeispiel beschrieben.

In einem Tiegel 1 aus Wolfram wird über einen Zufuhrstutzen 2 kontinuierlich teilchenförmiges Siliziumdioxid 3 zugegeben. Der Tiegel 1 besitzt eine Bodenausflußöffnung 4, in die ein Formwerkzeug 5 hineinragt, das an einer Stange 6 gehalten wird. Der Tiegel 1 ist nach außen mit einem Deckel 7 abgeschlossen, durch den der Zufuhrstutzen 2 für das teilchenförmige Siliziumdioxid in den Tiegel hineinragt. Zur Erhitzung auf Erweichungstemperatur ist im Ausführungsbeispiel eine Widerstandsheizspule 8 um den Tiegel mit Abstand angeordnet. Diese Spule ist nach außen durch die Wärmeisolation 9 geschützt. Anstelle der Widerstandsheizspule 8 kann selbstverständlich auch eine Induktionsheizspule verwendet werden. Der Raum zwischen Widerstandsheizspule 8 und Tiegel 1 wird mit einem Argon-Wasserstoff-Gemisch, das beispielsweise aus 90 % Argon und 10 % Wasserstoff besteht, gespült. Das Argon-Wasserstoff-Gemisch wird über den Stutzen 10 zugeführt und im Bereich des unteren Endes des Tiegels über einen nicht dargestellten Stutzen abgeführt. Das Formwerkzeug 5 liegt an positiven Potential, im Ausführungsbeispiel plus 400 V. Der Tiegel 1 ist über den Deckel 7 auf Erdpotential gelegt. Zur Aufrechterhaltung einer Wasserstoff-Helium-Atmosphäre im Tiegel 1, im Ausführungsbeispiel wurde ein Gemisch verwendet, das aus 90 % Wasserstoff und 10 % Helium besteht, wird dieses Gemisch über den Stutzen 11 zugeführt und über den Stutzen 12 im Deckel 7 abgeführt. Hierdurch ist sichergestellt, daß im Tiegel 1 immer die gewünschte wasserstoffhaltige Atmosphäre aufrechterhalten bleibt. Das feinteilige Siliziumdioxid 3 wird nun im Tiegel 1 auf eine Temperatur von etwa 2100°C bis 2200°C erhitzt. Das erweichte Siliziumdioxid fließt durch den Ringraum 13, der zwischen dem Formwerkzeug 5 und der Bodenausflußöffnung 4 gebildet wird. In diesem Ringraum wird das erweichte Siliziumdioxid der Einwirkung des elektrischen Feldes ausgesetzt, das von dem Formwerkzeug 5 auf die Bodenausflußöffnung 4 gerichtet ist. In dem Raum 14, der sich an den Formgebungsherstellungsbereich anschließt, und unterhalb des Tiegels liegt, wird ebenfalls eine wasserstoffhaltige Atmosphäre aufrechterhalten. Im Ausführungsbeispiel wird eine Helium-Wasserstoff-Atmosphäre verwendet. Das Helium-Wasserstoff-Gemisch mit 90 % Wasserstoff und 10 % Helium wird über den Stutzen 15 zugeführt. Das Quarzglas 16 wird, wie durch Pfeil 17 angedeutet, nach unten abgezogen. Die Abzugsgeschwindigkeit des Stabes 16 aus Quarzglas betrug im Ausführungsbeispiel 4 m pro Stunde. Der Durchmesser des Quarzglasstabes betrug im Ausführungsbeispiel 80 mm. Von dem erkalteten Quarzglas 16 werden Stäbe, wie durch Pfeil 17 angedeutet, in der gewünschten Länge abgetrennt.

Erfindungsgemäß hergestellte Quarzglasstäbe oder -rohre werden nun vorteilhafterweise noch an ihrer Außenoberfläche geätzt mittels Fluor-Wasserstoff-Säure, bis eine Dicke von maximal 2 mm abgetragen ist. Durch diese Ätzung werden in dieser Oberflächenschicht vorhandene Alakli-Verunreinigungen, die sich durch das erfindungsgemäße Verfahren dort angereichert haben, entfernt. Anstelle des Ätzens können auch andere Abtragungsverfahren, wie Schleifen, eingesetzt werden.

## Patentansprüche

1. Verfahren zur kontinuierlichen Herstellung eines Rohres oder Stabes aus Quarzglas durch Erhitzen von teilchenförmigem Siliziumdioxid auf Erweichungstemperatur in einem Tiegel aus hochschmelzendem Werkstoff, insbesondere aus im wesentlichen Wolfram oder Molybdän, mit Bodenausflußöffnung, in der ein Formwerkzeug angeordnet ist, und kontinuierliches Abziehen des erweichten Siliziumdioxids nach unten durch den zwischen Bodenausflußöffnung und Formwerkzeug gebildeten Ringraum, wobei im Tiegel oberhalb des Siliziumdioxids und im Raum, der sich an den Formgebungsbereich unterhalb des Tiegels anschließt, eine wasserstoffhaltige Atmosphäre aufrechterhalten wird, gekennzeichnet durch die Kombination folgender Merkmale: Es wird eine Atmosphäre mit einem Gehalt von wenigstens 80 % Wasserstoff verwendet und zwischen Formwerkzeug und Tiegel eine elektrische Potentialdifferenz derart und von der Größe aufrechterhalten, daß das elektrische Feld vom Formwerkzeug auf den Tiegel gerichtet ist und die elektrische Stromstärke mindestens 0,7 mA pro cm³ und Minute Verweilzeit des erweichten Siliziumdioxids im elektrischen Feld beträgt.

2. Verfahren nach Anspruch 1, dadurch gekennzeichnet, daß das teilchenförmige Siliziumdioxid auf eine Temperatur im Bereich von 1900°C bis 2300°C erhitzt und eine Potentialdifferenz im Bereich von 200 V bis 600 V aufrechterhalten wird.

3. Verfahren nach den Ansprüchen 1 oder 2, dadurch gekennzeichnet, daß eine Atmosphäre aus einem Wasserstoff-Helium-Gemisch verwendet wird, wobei dessen Wasserstoff-Gehalt mindestens 85 % beträgt.

4. Verfahren nach einem oder mehreren der vorhergehenden Ansprüche, dadurch gekennzeichnet, daß nach Erkalten des Rohres oder Stabes aus Quarzglas dessen Außenschicht bis zu einer Dicke von 2 mm abgetragen wird.

## Claims

1. A method for the continuous production of a tube or rod of quartz glass by heating to fusing temperature particulate silicon dioxide in a crucible of high-melting material, in particular of substantially tungsten or molybdenum, with a base outflow opening, in which a forming tool is arranged, and through continuous withdrawal of the fused silicon dioxide downwards through the annular space formed between the base outflow opening and the forming tool, in which in the crucible, above the silicon dioxide and in the space which joins on to the forming region beneath the crucible, a hydrogenous atmosphere is maintained, characterised by the combination of the following features:
An atmosphere with a content of at least 80% hydrogen is used and between the forming tool and the crucible an electrical potential difference is maintained, being such that and of the extent that the electrical field is directed from the forming tool onto the crucible and the electric current intensity is at least 0.7 mA per cm³ and minute period of dwell of the fused silicon dioxide in the electrical field.

2. A method according to Claim 1, characterised in that the particulate silicon dioxide is heated to a temperature in the range of 1900°C to 2300°C and a potential difference in the range of 200 V to 600 V is maintained.

3. A method according to Claims 1 or 2, characterised in that an atmosphere of a hydrogen/helium mixture is used, the hydrogen content of which is at least 85%.

4. A method according to one or more of the preceding claims, characterised in that after the tube or rod of quartz glass has cooled, its outer layer is removed down to a thickness of 2 mm.

## Revendications

1. Procédé de fabrication continue d'un tube ou d'une barre en verte de quartz par chauffage de dioxyde de silicium particulaire à la température de ramollissement dans un creuset en matériau à haut point de fusion, en particulier essentiellement en tunsgtène ou en molybdène, comportant un orifice d'écoulement inférieur dans lequel est disposé un outil de formage, et par soutirage continu du dioxyde de silicium ramolli vers le bas à travers la cavité annulaire formée entre l'orifice d'écoulement inférieur et l'outil de formage, tandis qu'une atmosphère contenant de l'hydrogène est maintenue dans le creuset au-dessus du dioxyde de silicium et dans l'espace qui fait suite au domaine de formage sous le creuset, caractérisé par la combinaison des caractéristiques suivantes : on utilise une atmosphère ayant une teneur en hydrogène d'au moins 80 % et on maintient entre l'outil de formage et le creuset une différence de potentiel électrique de type et de valeur tels que le champ électrique soit dirigé de l'outil de formage vers le creuset et que l'intensité du courant électrique soit d'au moins 0,7 mA/cm³ et par minute de temps de séjour du dioxyde de silicium ramolli dans le champ électrique.

2. Procédé selon la revendication 1, caractérisé en ce que le dioxyde de silicium particulaire est chauffé à une température située dans la plage de 1 900°C à 2 300°C et en ce qu'une différence de potentiel située dans la plage de 200 V à 600 V est maintenue.

3. Procédé selon les revendications 1 ou 2, caractérisé en ce que l'on utilise une atmosphère constituée par un mélange d'hydrogène et d'hélium dont la teneur en hydrogène est d'au moins 85 %.

4. Procédé selon une ou plusieurs des revendications précédentes, caractérisé en ce qu'à la suite du refroidissement du tube ou de la barre en verre de quartz, sa couche externe est retirée jusqu'à une épaisseur de 2 mm.
